# EUROPÄISCHE PATENTSCHRIFT

(11) **EP 3 324 362 B1**
(45) Veröffentlichungstag und Bekanntmachung des Hinweises auf die Patenterteilung: **03.07.2019**
(21) Anmeldenummer: 16199732.5
(22) Anmeldetag: 21.11.2016
(51) Int. Cl.: G06T 7/80, B25J 9/16

(54) **VERFAHREN UND VORRICHTUNG ZUR INBETRIEBNAHME EINES MEHRACHSSYSTEMS**
METHOD AND DEVICE FOR COMMISSIONING A MULTI-AXIS SYSTEM
PROCÉDÉ ET DISPOSITIF DE MISE EN SERVICE D'UN SYSTÈME MULTIAXES

(43) Veröffentlichungstag der Anmeldung: 23.05.2018
(73) Patentinhaber: Siemens Aktiengesellschaft, 80333 München (DE)
(72) Erfinder: Walter, Maximilian, 90408 Nürnberg (DE); Hamadou, Mehdi, 91052 Erlangen (DE); Richter, Jan, 91207 Lauf a. d. Pegnitz (DE)

(56) Entgegenhaltungen:
- DE-A1-102005 005 242
- DE-A1-102009 040 848
- US-A1- 2010 161 125

## Beschreibung

Die Erfindung betrifft ein Verfahren und eine Vorrichtung zur Inbetriebnahme eines Mehrachssystems. Das Mehrachssystem umfasst als Komponenten eine Anzahl an Segmenten, die über jeweilige Gelenke verbunden sind und in ein oder mehreren Achsen bewegbar sind, sowie ein Werkzeug, das mit einem der Segmente verbunden ist und an eine vorgegebene Position bewegbar und ansteuerbar ist.

Mehrachssysteme sind universelle, programmierbare Maschinen zur Handhabung, Montage oder Bearbeitung von Werkstücken. Diese werden auch als (Industrie-)Roboter bezeichnet. Diese sind für den Einsatz im industriellen Umfeld konzipiert. Einmal programmiert, ist ein solches Mehrachssystem in der Lage, einen Arbeitsablauf autonom durchzuführen, oder die Ausführung einer Aufgabe abhängig von Sensorinformationen in Grenzen zu variieren.

Die Gefahren, die von solchen Mehrachssystemen ausgehen, bestehen in den für einen Menschen oft völlig unvorhersehbaren, komplexen Bewegungsmustern und starken Beschleunigungen bei gleichzeitig enormen Kräften. Arbeiten neben einem ungesicherten Mehrachssystem können daher schnell schwere Verletzungen für eine in der Nähe des Mehrachssystems befindliche Person zur Folge haben.

Um derartige Unfälle zu vermeiden, ist eine sichere Überwachung der Position, einer positionsabhängigen Überwachung der Geschwindigkeit, einer Beschleunigung und der Orientierung von sich bewegenden Komponenten des Mehrachssystems erforderlich. Dies trifft insbesondere auf solche Arbeitsumgebungen zu, in denen ein Mehrachssystem in Kooperation mit einem Menschen zusammenarbeiten soll.

Ein solches Mehrachssystem ist bereits in der Druckschrift DE 10 2009 040 848 A1 beschrieben, wobei an dem System optisch zeitvariante Marker in einer aufzunehmenden realen Umgebung platziert sind und ein reales Bild der realen Umgebung zusammen mit dem Marker mittels einer Kamera aufgenommen wird um einen virtuellen Bildbestandteil mit zumindest einem Teil des realen Bildes zu einem Augmented-Reality-Bild zu kombinieren.

In der US 2010/0161125 A1 wird weiterhin beschrieben dass dem realen Marker jeweils ein virtueller Marker zugeordnet ist und eine Überprüfung erfolgt angesichts einer Überlagerung des realen mit dem virtuellen Markers. Eine Kalibrierung eines Kamerasystems in einer Augmented-Reality-Umgebung kann man auch der DE 10 2005 005 242 A1 entnehmen.

Eine Voraussetzung für die korrekte und sichere Funktionsweise eines solchen Mehrachssystems ist die Definition von Hüllkörpern für die sich bewegenden Komponenten sowie die korrekte Definition von Schutz- und Arbeitsräumen. Hüllkörper können verschiedene geometrische Abmessungen und Formen aufweisen. Übliche verwendete Hüllkörper sind z. B. Kugeln, Quader oder aus mehreren Quadern zusammengesetzte Gebilde. Die Definition von Hüllkörpern sowie die Festlegung von Schutz- und Arbeitsräumen ermöglicht eine Kooperation eines Mehrachssystems mit Menschen, solange sichergestellt ist, dass kein Hüllkörper einer Komponente des Mehrachssystems in einen Schutzraum eindringt. Werden bei der Definition dieser Körper Fehler gemacht, führt dies dazu, dass im laufenden Betrieb z.B. das Eindringen eines Hüllkörpers in einen Schutzbereich nicht erkannt wird, so dass eine Sicherheitsfunktion fälschlicherweise nicht ausgelöst wird.

Es ist bekannt, Koordinaten, Dimensionen und Orientierung der Hüllkörper der Komponenten eines Mehrachssystems manuell in ein Programm oder eine Datenbank einzugeben. Neben einem hohen manuellen Aufwand weist dieses Vorgehen den Nachteil auf, dass eine Überprüfung der aus der Eingabe resultierenden Hüllkörper anfällig gegen Denk- und Eingabefehler ist. Eine weitere bekannte Möglichkeit ist die Definition von Schutzräumen durch Bewegen des Werkzeugs des Mehrachssystems an die Ecken aller sich nicht bewegender Körper, d.h. der Schutzräume und des Arbeitsraums, bei gleichzeitiger Erfassung und Speicherung entsprechender Koordinaten. Diese Variante ist jedoch nur für Hüllkörper sich nicht bewegender Räume geeignet, jedoch nicht für Hüllkörper der sich bewegenden Komponenten des Mehrachs-systems.

Die beiden genannten Methoden arbeiten "punktorientiert". Ein die Hüllkörper definierender Benutzer muss daher die Hüllkörper gedanklich aus mehreren Punkten im dreidimensionalen Raum zusammensetzen. Dies erfordert eine hohe kognitive Leistung und ist daher anfällig für Fehler. Darüber hinaus ist es nicht einfach zu erkennen, ob ein Hüllkörper eines Segments des Mehrachssystems dieses auch wirklich vollständig enthält. Ein weiteres Problem besteht darin, dass nicht ohne weiteres festgestellt werden kann, ob ein definierter Hüllkörper dem korrekten Segment der Kinematik des Mehrachssystems zugeordnet ist. Wenn dies nicht der Fall ist, befindet sich dieser Hüllkörper im Ruhezustand zwar am korrekten Segment, folgt aber bei einer Bewegung nicht dem ihm eigentlich zugeordneten Segment, sondern z.B. einem anderen Segment.

Es ist Aufgabe der Erfindung, ein Verfahren und eine Vorrichtung anzugeben, die die Inbetriebnahme eines Mehrachs-systems auf einfachere Weise ermöglichen und sicherzustellen, dass eine verbesserte Definition von Schutz- und Arbeitsräumen erfolgt.

Diese Aufgabe wird gelöst durch ein Verfahren gemäß den Merkmalen des Patentanspruchs 1 und eine Vorrichtung gemäß den Merkmalen des Patentanspruchs 9. Vorteilhafte Ausgestaltungen ergeben sich aus den abhängigen Patentansprüchen.

Gemäß einem ersten Aspekt wird ein Verfahren zur Inbetriebnahme eines Mehrachssystems vorgeschlagen. Das Mehrachssystem umfasst als Komponenten eine Anzahl an Segmenten und an Werk-zeug. Die Anzahl an Segmenten ist über jeweilige Gelenke paarweise verbunden und durch eine Steuerung in einer oder mehreren Achsen bewegbar. Das Werkzeug ist mit einem der Segmente verbunden und durch die Steuerung an eine vorgegebene Position bewegbar und ansteuerbar. Typischerweise ist dem Mehrachssystem ein Arbeitsraum zugeordnet, in dem ein Aufenthalt und/oder eine Bewegung der Komponenten des Mehrachssystems erlaubt ist. Ferner ist dem Mehrachssystem zumindest ein Schutzraum zugeordnet, in welchen ein Eindringen der Komponenten nicht erlaubt ist.

Zur Inbetriebnahme des Mehrachssystems werden die folgenden Schritte ausgeführt: Es wird eine Mehrzahl an optischen Markern in der Umgebung des Mehrachssystems angeordnet. Es werden die Positionskoordinaten der optischen Marker in einem ersten, globalen Koordinatensystem ermittelt und in der Steuerung gespeichert. Die Umgebung des Mehrachssystems mit der Mehrzahl an optischen Markern wird durch ein Kamerasystem, das zumindest eine Kamera umfasst, als Bilddaten erfasst. Die Bilddaten des Kamerasystems werden an ein Augmented Reality (AR)-System übertragen und in einer Ausgabevorrichtung visualisiert, wobei in der Visualisierung der Bilddaten zusätzlich zu den in den Bilddaten enthaltenen optischen Markern virtuelle Marker dargestellt werden. Ein jeweiliger virtueller Marker ist genau einem der optischen Marker zugeordnet. Die Position eines jeweiligen virtuellen Markers in den visualisierten Bilddaten ergibt sich aus einer Transformation der Positionskoordinaten des zugeordneten optischen Markers aus dem ersten, globalen Koordinatensystem in ein zweites Koordinatensystem entsprechend einer Position und Orientierung des Kamerasystems. Das zweite Koordinatensystem ist somit ein Koordinatensystem des Kamerasystems, wobei sich dessen Achsen an der Position und Orientierung des Kamerasystems ausrichten. Es erfolgt schließlich eine Überprüfung, ob ein optischer Marker und der zugeordnete virtuelle Marker in den visualisierten Bilddaten sich überlagern.

Durch das vorgeschlagene Verfahren wird es ermöglicht zu überprüfen, ob das AR-System korrekt arbeitet. Damit kann das AR-System dazu verwendet werden, eine funktional sichere Definition und Überprüfung von Hüllkörpern sowie der Schutz- und Arbeitsbereiche zu realisieren. Dadurch können eventuell auftretende Fehler bei der Definition der Hüllkörper oder bei einer Zuordnung eines Hüllkörpers zu einer jeweiligen Komponente des Mehrachssystems durch die Möglichkeit der visuellen Überprüfung in dem AR-System auf einfache und schnelle Weise festgestellt werden. Dadurch ist die Inbetriebnahme eines Mehrachssystems weniger anfällig für Denkfehler.

Die Ermittlung der Positionskoordinaten der Mehrzahl an optischen Markern kann auf unterschiedliche Weise erfolgen. In einer Variante wird zur Ermittlung der Positions-koordinaten der optischen Marker ein TCP (Tool Center Point) des Werkzeugs des Mehrachssystems auf einen jeweiligen optischen Marker bewegt. Dann werden die der Steuerung bekannten Positionskoordinaten des TCP als die Positionskoordinaten des optischen Markers ermittelt und gespeichert. Die Bewegung kann manuell in einem sog. Tipp-Betrieb oder automatisch erfolgen. In einer alternativen Variante werden zur Ermittlung der Positionskoordinaten eines jeweiligen optischen Markers eine auf das Werkzeug, insbesondere den TCP, angebrachte Markierung und der gerade verarbeitete optische Marker durch das AR-System erfasst. Es wird eine Entfernung zwischen der Markierung und dem optischen Marker ermittelt. Die Position des Werkzeugs wird dann iterativ verändert bis die Entfernung minimal ist. Die der Steuerung bekannten Positionskoordinaten des Werkzeugs, insbesondere des TCP, werden als die Positionskoordinaten des optischen Markers ermittelt und gespeichert.

Der TCP ist ein im Umfeld von Mehrachssystemen gedachter bekannter Referenzpunkt, der sich an geeigneter Stelle an dem Werkzeug befindet. Um zu beschreiben, welche Lage das Werkzeug des Mehrachssystems einnimmt, ist es ausreichend, die Position und Orientierung des TCP im Raum, d.h. in dem ersten, globalen Koordinatensystem zu definieren.

Die zweite Variante zur Ermittlung der Positionskoordinaten ermöglicht es, die Positionskoordinaten der jeweiligen optischen Marker automatisiert zu ermitteln. Dabei wird ein iteratives Suchverfahren verwendet, bei dem das Werkzeug bzw. der TCP so lange bewegt wird, bis der Abstand zwischen dem Werkzeug bzw. dem TCP und dem gerade betrachteten optischen Marker minimal wird. Dieses Vorgehen wird für alle optischen Marker wiederholt.

Gemäß einer zweckmäßigen Ausgestaltung wird in dem Schritt des Überprüfens auf eine korrekte Kalibrierung des AR-Systems entschieden, wenn der optische Marker und der zugeordnete virtuelle Marker in den visualisierten Bilddaten sich überlagern. Die korrekte Kalibrierung des AR-Systems liegt insbesondere dann vor, wenn die Überlagerung des optischen Markers und des zugeordneten virtuellen Markers unabhängig von dem Winkel, in dem das Kamerasystem die Umgebung des Mehrachssystems aufnimmt, gegeben ist. Es versteht sich, dass die korrekte Überlagerung dabei nicht nur für einen einzelnen oder ausgewählten optischen Marker und zugeordneten virtuellen Marker, sondern für alle optischen Marker und deren zugeordnete virtuelle Marker gegeben ist.

In einer anderen Ausgestaltung wird in dem Schritt des Überprüfens auf eine fehlerhafte Kalibrierung des AR-Systems entschieden, wenn der optische Marker und der zugeordnete virtuelle Marker in den visualisierten Bilddaten sich nicht oder nur teilweise überlagern. Insbesondere wird aus einem in den visualisierten Bilddaten ermittelten Versatz zwischen dem optischen Marker und dem zugeordneten virtuellen Marker ermittelt, wie groß die tatsächliche Distanz zwischen dem optischen Marker und dem zugeordneten virtuellen Marker ist.

Bei einer Nicht-Überlagerung des optischen Markers mit dem zugeordneten virtuellen Marker kann gemäß einer weiteren Ausgestaltung eine Transformationsvorschrift für die Transformation der Positionskoordinaten von dem ersten, globalen Koordinatensystem in das zweite Koordinatensystem angepasst werden. Dieser Vorgang kann insbesondere so lange iterativ wiederholt werden, bis eine Überlagerung des optischen Markers und des zugeordneten virtuellen Markers gegeben ist.

Der Schritt des Überprüfens kann rechnergestützt durch ein Bildverarbeitungsprogramm durchgeführt werden. Ebenso kann auf einfache Weise durch einen Nutzer, welcher die Inbetriebnahme des Mehrachssystems vornimmt, anhand der Ausgabevorrichtung erkannt werden, ob eine Überlagerung des virtuellen Markers und des zugeordneten optischen Markers gegeben ist. In beiden Fällen lässt sich dadurch die korrekte Kalibrierung des AR-Systems auf einfache Weise überprüfen, was die Inbetriebnahme im Hinblick auf korrekt definierte Hüllkörper, Schutz- und Arbeitsräume stark vereinfacht.

Eine weitere Ausgestaltung sieht vor, dass Positionskoordinaten eines TCP des Werkzeugs des Mehrachssystems von dem ersten, globalen Koordinatensystem in das zweite Koordinatensystem umgerechnet werden und in den visualisierten Bilddaten zusätzlich zu dem TCP ein virtueller TCP dargestellt wird für eine Überprüfung, ob der TCP und der virtuelle TCP sich in den visualisierten Bilddaten überlagert. Dieses Vorgehen ermöglicht die Überprüfung, ob das AR-System bei der späteren Visualisierung von Hüllkörpern eine korrekte Referenz zu dem TCP des Mehrachssystems aufweist.

Erfindungsgemäß ist vorgesehen, dass auf jeder der Komponenten eine Markierung angeordnet ist, welche durch Bildverarbeitung in den visualisierten Bilddaten detektierbar ist. Für jede der Komponenten ist ein Hüllkörper definiert und dieser zugeordnet, wobei ein einer Komponente zugeordneter Hüllkörper die zugeordnete Komponente, insbesondere vollständig, einschließt. Bei einer Bewegung des Mehrachssystems im Raum wird die Position der Hüllkörper in dem ersten, globalen Koordinatensystem berechnet und in das zweite Koordinatensystem entsprechend der Position und Orientierung des Kamerasystems transformiert, wobei die in das zweite Koordinatensystem transformierten Hüllkörper zusammen mit dem von dem Kamerasystem aufgenommenen Bild, das die Markierung einer jeweiligen Komponente umfasst, in dem AR-System visualisiert werden.

Durch Auswertung der Bewegung einer jeweiligen Markierung der Komponente und der Bewegung der zugeordneten Hüllkörper wird überprüft, ob die Hüllkörper ihrer zugeordneten Komponente während der Bewegung folgen. Mit anderen Worten lässt sich durch diese Ausgestaltung überprüfen, ob auch bei einer Bewegung der Kinematik des Mehrachssystems jeweiliger Komponenten zugeordnete Hüllkörper, diese weiter (dauerhaft) einhüllen. Durch das Anbringen der Markierung an einzelne Komponenten der Kinematik kann dieser Schritt rechnergestützt und automatisiert durch Bildverarbeitung ausgeführt werden.

Die Erfindung schlägt ferner ein Computerprogrammprodukt vor, das direkt in den internen Speicher eines digitalen Computers geladen werden kann und Softwarecodeabschnitte umfasst, mit denen die Schritte des in dieser Beschreibung beschriebenen Verfahren ausgeführt werden, wenn das Produkt auf einem Computer läuft. Ein Computer kann in diesem Sinne die Gesamtheit aus der beschriebenen Steuerung und/oder dem AR-System sein.

Gemäß einem zweiten Aspekt wird eine Vorrichtung zur Inbetriebnahme eines Mehrachssystems vorgeschlagen. Das Mehrachssystem umfasst als Komponenten eine Anzahl an Segmenten und ein Werkzeug. Die Anzahl an Segmenten ist über jeweilige Gelenke verbunden und in einer oder mehreren Achsen bewegbar. Das Werkzeug ist mit einem der Segmente verbunden und an eine vorgegebene Position bewegbar und ansteuerbar.

Die Vorrichtung umfasst eine Steuerung zur Ansteuerung der Komponenten des Mehrachssystems. Die Vorrichtung umfasst weiter ein Kamerasystem mit zumindest einer Kamera, welches das Mehrachssystem aus einer Umgebung erfasst und Bilddaten der Umgebung bereitstellt. Die Vorrichtung umfasst ferner eine Mehrzahl an optischen Markern in der Umgebung des Mehrachs-systems, deren Positionskoordinaten in einem ersten, globalen Koordinatensystem in der Steuerung gespeichert sind. Schließlich umfasst die Vorrichtung ein AR-System, das die von dem Kamerasystem erfassten Bilddaten verarbeitet und in einer Ausgabevorrichtung visualisiert und dass dazu eingerichtet ist, in der Visualisierung der Bilddaten zusätzlich zu den in den Bilddaten enthaltenen optischen Markern virtuelle Marker darzustellen, wobei ein jeweiliger virtueller Marker genau einem der optischen Marker zugeordnet ist und die Position eines jeweiligen virtuellen Markers in den visualisierten Bilddaten sich aus einer Transformation der Positionskoordinaten des zugeordneten optischen Markers aus dem ersten, globalen Koordinatensystem in ein zweites Koordinatensystem entsprechend einer Position und Orientierung des Kamerasystems ergibt. Ferner ist das AR-System dazu eingerichtet, zu überprüfen, ob sich ein optischer Marker und der zugeordnete virtuelle Marker in den visualisierten Bilddaten überlagern.

Die erfindungsgemäße Vorrichtung weist die gleichen Vorteile auf, wie sie vorstehend in Verbindung mit dem erfindungsgemäßen Verfahren beschrieben wurden.

Darüber hinaus kann die Vorrichtung weitere Mittel umfassen, welche sie zur Durchführung des in diesem Dokument beschriebenen Verfahrens befähigen.

Die Erfindung wird nachfolgend näher anhand eines Ausführungsbeispiels in der Zeichnung erläutert.

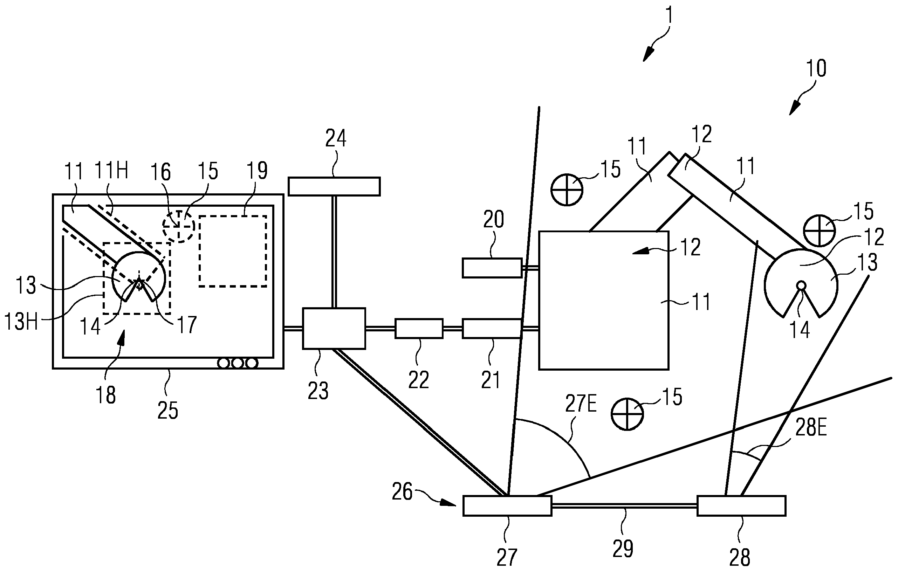

Fig. 1 zeigt in einer schematischen Darstellung eine erfindungsgemäße Vorrichtung 1 zur Inbetriebnahme eines Mehrachssystems 10. Das Mehrachssystem 10 kann beispielsweise ein Industrieroboter, eine Produktions- oder Verpackungsmaschine, eine CNC-Fräsmaschine, ein Verladekran oder dergleichen sein. Unter einem Mehrachssystem ist jedoch auch eine Fertigungszelle mit einer Mehrzahl an derartigen Maschinen zu verstehen.

In der schematischen Darstellung der Fig. 1 umfasst das Mehrachssystem 10 eine Anzahl an Segmenten 11, welche paarweise über ein Gelenk 12 miteinander verbunden sind. An einem freien Ende eines letzten Segments 11 ist beispielhaft ein Werkzeug 13 mit einem TCP (Tool Center Point) 14 angeordnet. Mittels des TCP wird die Werkzeugposition des Mehrachssystems 10 beschrieben. Der TCP ist ein Referenzpunkt, der sich an geeigneter Stelle an dem Werkzeug 13 befindet.

Die Kinematik des Mehrachssystems 10 wird von einer Steuerung 20 angesteuert. Die Steuerung, z. B. eine speicherprogrammierbare Steuerung (SPS), kann durch eine Recheneinheit bereit gestellt sein. Darüber hinaus umfasst das Mehrachssystem 10 funktional sichere Sensoren (nicht dargestellt zur Erfassung der Achspositionen der Kinematik, d. h. der einzelnen Segmente 11 und Gelenke 12. Die Werte der funktional sicheren Sensoren werden durch eine funktional sichere Steuerung (sogenannte F-SPS) auf der ein funktional sicheres Programm abläuft, eingelesen. Durch die funktional sichere Steuerung 21 kann die Position des TCP der Kinematik des Mehrachssystems 10 berechnet werden. Die funktional sichere Steuerung 21 berechnet auch die aktuelle Position der Kinematik-Hüllkörper in einem sog. Weltkoordinatensystem. Sie prüft, ob es eine Überschneidung zwischen später beschriebenen Hüllkörpern und den Schutzräumen gibt, oder ob ein Hüllkörper den Arbeitsraum verlässt. Darüber hinaus besteht die Aufgabe der funktional sicheren Steuerung 21 darin, das Einhalten einer Maximalgeschwindigkeit während eines manuellen Betriebs des Mehrachssystems, der zur Durchführung eines Verfahrensschritts während der Inbetriebnahme des Mehrfachsystems notwendig sein kann, zu überwachen. Tritt einer dieser Fälle ein, wird eine Sicherheitsfunktion ausgeführt, z.B. das Stillsetzen der Kinematik.

Obwohl in dem dargestellten Ausführungsbeispiel die Steuerung 20 und die funktional sichere Steuerung 21 als getrennte Komponenten gezeigt sind, können die Steuerung 20 und die funktional sichere Steuerung 21 auch durch eine einzige Steuerung verwirklicht sein.

Die Vorrichtung umfasst ein Programmiergerät 22, dass an die Steuerung und/oder die funktional sichere Steuerung 21 angeschlossen ist, um ein Programm bzw. Parameter in die Steuerung 20 bzw. funktional sichere Steuerung 21 zu laden sowie von diesem berechnete Werte auszulesen.

Die Vorrichtung 1 umfasst darüber hinaus ein Kamerasystem 26. Das Kamerasystem 26 umfasst eine erste Kamera 27, welche die Umgebung des Mehrachssystems 10 erfasst. Das von der ersten Kamera 27 erfasste Bild wird zur Ermittlung der Position des Kamerasystems und der Orientierung des Kamerasystems 26 genutzt. Darüber hinaus umfasst das Kamerasystem 26 eine optionale zweite Kamera 28. Die optionale zweite Kamera 28 dient dazu, einen bestimmten Ausschnitt (in dieser Beschreibung auch als Szene bezeichnet) aufzunehmen. Sofern das Kamerasystem neben der ersten Kamera 27 auch die optionale zweite Kamera 28 umfasst, sind diese mittels einer starren Verbindung 29 miteinander verbunden. Dadurch sind die Position und Orientierung der ersten und der zweiten Kamera 27, 28 zueinander bekannt. Die in diesem Ausführungsbeispiel gezeigte Verwendung von zwei Kameras 27, 28 erlaubt eine Beobachtung der Szene aus verschiedenen Winkeln. Im vorliegenden Ausführungsbeispiel sind ein Erfassungsbereich der ersten Kamera 27 mit 27E und ein Erfassungsbereich der zweiten Kamera 28 mit 28E gekennzeichnet. Es ist ohne weiteres ersichtlich, dass der Erfassungsbereich 27E das Mehrachssystem 10 im Gesamten erfasst, während der Erfassungsbereich der 28E der zweiten Kamera 28 derart gewählt ist, dass insbesondere das Werk-zeug 13 und ein Teil des das Werkzeug 11 haltenden Segments erfasst werden. Die Verwendung einer zweiten Kamera reduziert darüber hinaus das Risiko einer Verdeckung von Teilen des Mehrachssystems 10.

Die Vorrichtung 1 umfasst darüber hinaus ein AR-System 23, welches das von der ersten Kamera 27 erfasste Bild ein-liest und die Position der ersten Kamera 27 beziehungsweise des Kamerapaars durch Auswertung der Bildinformation ermittelt. Das Bild der zweiten Kamera 28 und Informationen aus der funktional sicheren Steuerung 21 werden ebenfalls durch das AR-System eingelesen, miteinander kombiniert und an eine Ausgabevorrichtung 25 zur Visualisierung weitergeleitet.

Das AR-System 23 kann in Software realisiert sein und auf dem Programmiergerät 22 ausgeführt werden. Alternativ kann das AR-System 23, wie gezeigt, als eigenständige Komponente realisiert sein. In diesem Fall besteht eine Kommunikationsverbindung zu dem Programmiergerät 22.

An das AR-System 23 ist eine Ausgabevorrichtung 25 angeschlossen, die in diesem Ausführungsbeispiel das von der zweiten Kamera 28 erfasste Bild anzeigt. Zusätzlich werden von dem AR-System 23 den in dem gezeigten Bildausschnitt sichtbaren Komponenten (hier ein Segment 11 und das Werk-zeug 12) definierte Hüllkörper, welche nachfolgend näher beschrieben werden, überlagert. Die Ausgabevorrichtung 25 kann ein Rechner, wie z.B. ein PC, ein Laptop, ein Tablet, ein Smartphone, aber auch eine AR-Brille und jedes sonstige Gerät zur Darstellung zweidimensionaler oder dreidimensionaler Bilder sein. Um Fehler in der Ausgabevorrichtung 25 zu erkennen, können auch diversitäre Ausgabevorrichtungen, z. B. eines während der Definition der nachfolgend näher beschriebenen Hüllkörper, und ein anderes während der Prüfung, verwendet werden.

In einer alternativen Ausgestaltung können die erste und die zweite Kamera 27, 28 die Ausgabevorrichtung 25 mit dem AR-System 23 in einem gemeinsamen Gerät vereint sein.

In der Umgebung des Mehrachssystems 10 ist eine Anzahl an Markern 15 verteilt. Lediglich beispielhaft sind in der Darstellung der Fig. 1 drei solcher Marker 15 gezeigt. Bei den Markern 15 kann es sich um optische Marker, wie z.B. Aufkleber, aber auch Gegenstände mit einer bestimmten Form und/oder Farbe handeln. Allgemein können als optische Marker 15 jedoch auch ausgewählte Kanten und/oder Ecken oder andere prägnante Bestandteile des Mehrachssystems 10 und/oder der Umgebung des Mehrachssystems verwendet werden. Es ist zweckmäßig, wenn die Marker 15 gleichmäßig im Raum angeordnet sind. Mittels der Marker 15 ist es dem AR-System 23 möglich, eine genaue Positionsbestimmung sowie eine Ermittlung der Position und Orientierung des Kamerasystems 26 vorzunehmen. Falls das AR-System Marker zur Positionsbestimmung nicht benötigt, da andere Komponenten und/oder technische Einheiten zur Positionsbestimmung genutzt werden, brauchen die Marker 15 nicht optisch durch das Kamerasystem 26 erfassbar sein.

Die funktional sichere Definition und Überprüfung von Hüllkörpern sowie von Schutz- und Arbeitsräumen wird durch das nachfolgend näher beschriebene Verfahren erreicht.

In einem ersten Schritt werden an geeigneten Stellen mehrere der Marker 15 angeordnet, die dem AR-System 23 eine exakte Lokalisation des Kamerasystems 26 ermöglichen. Die Stellen der Platzierung der Marker 15 werden derart ausgewählt, dass die Marker 15 aus möglichst vielen Blickwinkeln für das Kamerasystem 26 erfassbar sind.

Im nächsten Schritt wird die Position der Marker 15 in einem globalen Koordinatensystem der Kinematik des Mehrachs-systems 10 ermittelt. Dies erfolgt z.B. dadurch, dass der TCP 14 des Werkzeugs 13 auf einen jeweiligen Marker 15 bewegt wird und die Position durch das Eingabegerät 24 bestätigt wird. Durch eine funktional sicher implementierte und ausgeführte Vorwärtstransformation der funktional sicheren Steuerung 21 können die kartesischen Koordinaten des betreffenden Markers 15 sicher ermittelt werden. Die Marker 15 sind danach im globalen Koordinatensystem des Mehrachssystems 10 ermittelt.

Das Bewegen des TCP auf einen jeweiligen Marker 15 kann beispielsweise manuell, im sogenannten Tipp-Betrieb erfolgen.

Ebenso kann das Bewegen des TCP auf einen betreffenden Marker automatisch erfolgen. Dazu wird am TCP 14 des Werkzeugs 12 eine Markierung angebracht, sodass das AR-System 23 in die Lage versetzt wird, die Entfernung des TCP 14 zu den jeweiligen Markern 15 zu berechnen. Für einen gegebenen Marker 15 werden die Segmente 11 des Mehrachssystems im Rahmen eines Suchverfahrens solange bewegt, bis dieser Abstand minimal wird. Dieses Vorgehen wird für alle Marker 15 wiederholt.

In einer weiteren alternativen Vorgehensweise des Automatikbetriebs lässt sich durch das Anbringen eines Laserentfernungsmessgeräts mit Funkschnittstelle (nicht dargestellt) am TCP 14 realisieren. Das AR-System 23 erkennt den Laserspot im Kamerabild, z. B. durch Einschalten/Ausschalten eines Lasers des Entfernungsmessgeräts und Beobachten der Pixel im Kamerabild. Gleichfalls erkennt das AR-System 23 den Marker 15 und berechnet den Abstand zwischen dem Laserspot und dem betreffenden Marker 15. Dabei liest das AR-System 23 die gemessene Entfernung aus dem Entfernungsgerät per Funk und kombiniert sie mit den Koordinaten des TCP aus der Steuerung 20 des Mehrachssystems 10. Die Steuerung 20 bewegt anschließend die Kinematik des Mehrachssystems 10 entsprechend dem berechneten Abstand bis der Laserspot mit dem Marker 15 überlagert ist.

Dieser Vorgang wird solange ausgeführt bis alle Marker 15 im Koordinatensystem des Mehrachssystems 10 gemessen wurden.

In einem nächsten Schritt erfolgt die Übertragung der Positionskoordinaten der Marker 15 von der funktional sicheren Steuerung 21 in das AR-System 23. Das AR-System 23 ist dadurch in der Lage, aus einem bewegten Bild des Kamerasystems 26, das die Marker 15 enthält, auf die Position und Richtung des Kamerasystems im globalen Koordinatensystem zu schließen.

Anschließend erfolgt eine Überprüfung, ob das AR-System 23 korrekt arbeitet, d.h. die in der Ausgabevorrichtung 25 ausgegebenen Informationen korrekt dargestellt werden. Diese Überprüfung erfolgt dadurch, dass das AR-System 23 dem Marker 15 im Bild der Ausgabevorrichtung 25 einen jeweils zugeordneten virtuellen Marker 16 überlagert. Der bzw. die virtuellen Marker 16 sowie der bzw. die diesen zugeordneten tatsächlichen Marker 15 werden auf der Ausgabevorrichtung 25 gemeinsam mit dem Kamerasystem 26 erfassten Bild angezeigt. Die realen Marker 15 müssen bei korrekter Funktionsweise des AR-Systems 23 mit dem zugeordneten virtuellen Marker 16 deckungsgleich sein. Dies muss dabei unabhängig davon zutreffen, aus welchem Winkel die Marker 15 von dem Kamerasystem 26 aufgenommen werden.

Darüber hinaus liest das AR-System 23 die von der funktional sicheren Steuerung 21 berechnete Position des TCP und zeigt in der Ausgabevorrichtung 25 einen virtuellen TCP 17 an. Der virtuelle TCP muss mit dem tatsächlichen TCP 14 deckungsgleich sein, und zwar unabhängig davon, an welcher Position sich das Kamerasystem 26 und der TCP 24 befinden.

Die Überprüfung kann rechnergestützt mit Hilfe eines Bildverarbeitungsprogramms automatisiert durchgeführt werden. Bestehen z. B. die virtuellen Marker 16 aus gelben Kreisen und sind die physischen Marker 15 blaugefärbt, müssen auf dem Bild der Ausgabevorrichtung 25 alle blauen Pixel von einem gelben Rand eingeschlossen sein. Umgekehrt gilt, dass sich innerhalb der gelben Kreise nur blaue Pixel befinden dürfen. Die Überprüfung erfolgt auf Pixelebene in dem zweidimensionalen Bild der Ausgabevorrichtung 25.

Darüber hinaus kann rechnergestützt ermittelt werden, welcher realen Distanz ein Pixelversatz entspricht, sofern sich ein Marker 15 und ein zugeordneter virtueller Marker 16 nicht vollständig überlagern. Wenn der Fehler vernachlässigbar ist, was z. B. durch visuelle Überprüfung durch einen Nutzer oder rechnergestützt durch Bildverarbeitung erfolgen kann, kann die Prüfung akzeptiert werden. Dies kann mit Hilfe eines dezidierten Eingabebefehls über ein Eingabegerät erfolgen. Andernfalls muss manuell oder rechnergestützt entschieden werden, ob eine Nachkalibrierung erforderlich ist, d.h. ob eine Transformationsvorschrift zur Transformation von Positionskoordinaten von dem ersten, globalen Koordinatensystem in das zweite Koordinatensystem erforderlich ist.

Falls die zuvor erfassten Marker 15 nicht ausreichend sind, die Position und Richtung des Kamerasystems 26 zu ermitteln, da beispielsweise nicht alle oder nicht ausreichend viele Marker 15 aus allen nötigen Blickwinkeln sichtbar sind, können weitere temporäre Marker in der Umgebung des Mehrachssystems 10 angeordnet werden. Die Position der temporären Marker (nicht dargestellt) kann vom AR-System 23 unter Zuhilfenahme der bisherigen Marker 15 ermittelt werden. Eine Kalibrierung der temporären Marker kann durch das Vorsehen entsprechender visueller Marker erfolgen, die - wie oben beschrieben - im AR-System mit den temporären Markern überlagert werden. Anstelle von temporären Markern können auch bereits bestehende Referenzpunkte, z. B. Eckpunkte von unbeweglichen Objekten oder ähnliches, als temporäre Marker verwendet werden.

In einem nächsten Schritt erfolgt die Definition der Hüllkörper für die Komponenten (Segmente 11, Gelenke 12, Werkzeug 13) des Mehrachssystems 10.

Mit Hilfe eines (z. B. nutzergeführten) Hilfsmarkers und des Eingabegeräts werden Stützpunkte der Hüllkörper 11H, 13H definiert. Ein Hüllkörper 11H, 13H kann beispielsweise die Gestalt eines Quaders haben, der durch eine Anzahl an Eckpunkten definiert ist. Ist der Hüllkörper eine Kugel, so kann die Kugel durch wenigstens drei Punkte auf der Kugeloberfläche definiert werden. Ein Nutzer hält den Hilfsmarker an die gewünschte Position eines Stützpunktes und aktiviert das Eingabegerät. Dies veranlasst das AR-System 23, die Position des Hilfsmarkers zu berechnen. Die Berechnung erfolgt anhand der Bilddaten und der in den Bilddaten enthaltenen Marker 15, deren Position in dem ersten, globalen Koordinatensystem bekannt ist. Sind alle Stützpunkte für einen Hüllkörper 11H, 13H eingegeben, wird der Hüllkörper 11H, 13H berechnet und in der funktional sicheren Steuerung 21 gespeichert. Dies wird für alle Komponenten des Mehrachssystems 10 wiederholt. Bei der Definition der Hüllkörper 11H, 13H ist zu beachten, dass ein jeweiliger, einer Komponente 11, 13 zugeordneter Hüllkörper 11H, 13H die Komponente vollumfänglich umschließt.

Alternativ kann die Art und Dimension eines Hüllkörpers definiert werden, z. B. Quader, Kugel oder ähnliches. Anschließend wird der Hüllkörper interaktiv über das Eingabegerät und Kontrolle durch die Ausgabevorrichtung platziert, indem der Hilfsmarker an die entsprechende Position und Orientierung bewegt wird. Mit Hilfe des Eingabegeräts 24 wird die korrekte Position und Orientierung bestätigt. Anschließend können Dimension, Position und Orientierung des platzierten Hüllkörpers auf ähnliche Weise angepasst werden, bis eine gewünschte Genauigkeit erreicht ist.

Nachdem alle Hüllkörper definiert wurden, werden die Hüllkörper in Schutzräume, Arbeitsräume und Hüllkörper eingeteilt. Die Hüllkörper werden den einzelnen Komponenten (Segmente 11, Werkzeug 13, Gelenke 12) der Kinematik des Mehrachssystems 10 zugeordnet. Es versteht sich, dass der oder die Schutz- und Arbeitsräume im Zuge der Definition der Körper oder vorab erstellt worden sein können.

Die Überprüfung der definierten Hüllkörper 11H, 13H erfolgt dadurch, dass die funktional sichere Steuerung 21 die Position der Hüllkörper ggf. in Abhängigkeit aktueller Positionen der Segmente 11, 13 des Mehrachssystems 10 berechnet. Das AR-System 23 liest die aktuelle Position und Orientierung der Hüllkörper 11H, 13H sowie des Schutzraums 19 aus der funktional sicheren Steuerung 21 ein. Anschließend transformiert das AR-System 23 die Hüllkörper 11H, 13H bzw. den Schutzraum 19 entsprechend der Position und Orientierung des Kamerasystems 26. Die Hüllkörper 11H, 13H und der oder die Arbeitsräume 18 sowie der oder die Schutzräume 19 werden mit dem tatsächlichen Bild des Kamerasystems 26 überlagert und auf der Ausgabevorrichtung 25 dargestellt. Der Arbeitsraum ist lediglich schematisch mit dem Bezugszeichen 18 gekennzeichnet. In Fig.1 sind die Hüllkörper 11H für das Segment 11 und 13H für das Werkzeug 13 jeweils als Quader dargestellt. Lediglich beispielhaft ist ein Schutzraum 19, beispielhaft in Gestalt eines Quaders, visualisiert. Während einer Bewegung der Kinematik des Mehrachssystems 10 folgen, eine korrekte Definition der Hüllkörper vorausgesetzt, diese den jeweiligen Komponenten des Mehrachssystems 10. Mit Hilfe des AR-Systems kann dann geprüft werden, ob die zuvor definierten und gespeicherten Hüllkörper, Schutz- und Arbeitsräume mit der Realität übereinstimmen. Fehlerhaft wäre es z.B., wenn ein Hüllkörper zu klein ist, und ein Teil des Mehrachssystems nicht eingehüllt ist. Diese Prüfung kann manuell erfolgen, d.h. durch Betrachtung des augmentierten Kamerabildes. Alternativ kann die Prüfung auch automatisch erfolgen. Wenn z. B. das Mehrachssystem orange lackiert ist, die überlagerten Hüllkörper aber blau in der Visualisierung eingefärbt sind, darf im augmentierten Bild kein blaues Pixel mehr vorkommen. Diese Prüfung kann durch eine Bilderkennungssoftware erfolgen.

Die Überprüfung, ob ein einer Komponente zugeordneter Hüllkörper 11H, 13H den zugeordneten Komponenten der Kinematik bei einer Bewegung erfolgt, kann automatisiert wer-den. Dies kann durch das Anbringen von speziellen Markierungen (nicht dargestellt) an die einzelnen Komponenten bzw. Glieder der Kinematik des Mehrachssystems 10 erreicht werden. Dadurch wird das AR-System 23 in die Lage versetzt, die Bewegung der einzelnen Glieder der Kinematik direkt zu erfassen und mit der Bewegung der Hüllkörper zu vergleichen.

Falls nötig, kann das Kamerasystem 26 bewegt werden, um die Hüllkörper 11H, 13H und den oder die Arbeits- und/oder Schutzräume 18, 19 aus verschiedenen Blickwinkeln zu betrachten.

Falls das AR-System 23 die Position und Orientierung des Kamerasystems 26 auch ohne Marker 15 exakt lokalisieren kann, kann das Anordnen der Marker 15 sowie deren Kalibrierung und Übertragung der Positionskoordinaten an das AR-System 23 entfallen. Dies ist beispielsweise dann möglich, wenn allein durch Analyse des Bilds des Kamerasystems 26 oder mit Hilfe von speziellen Sensoren, die beispielsweise an oder in dem Kamerasystem 26 verbaut sind, eine Lokalisierung von Position und Orientierung des Kamerasystems möglich ist.

Für ein gegebenes Mehrachssystem, z.B. einen Sechs-Achs-Roboter, kann ein Schritt-für-Schritt-Prozess festgelegt werden, der durch die Definition der Hüllkörper führt. Auf diese Weise kann keine Komponente des Mehrachssystems vergessen werden.

### Bezugszeichenliste

- 1: Vorrichtung zur Inbetriebnahme eines Mehrachssystems

- 10: Mehrachssystem
- 11: Segment
- 11H: Hüllkörper des Segments 11
- 12: Gelenk
- 13: Werkzeug
- 13H: Hüllkörper des Werkzeugs 13
- 14: TCP (Tool Center Point)
- 15: Marker
- 16: virtueller Marker
- 17: virtueller TCP
- 18: Arbeitsraum
- 19: Schutzraum
- 20: Steuerung (SPS)
- 21: funktional sichere Steuerung (F-SPS)
- 22: Prgrammiergerät
- 23: AR-System
- 24: Eingabegerät
- 25: Ausgabevorrichtung
- 26: Kamerasystem
- 27: erste Kamera
- 27E: Erfassungsbereich der ersten Kamera 27
- 28: zweite Kamera
- 28E: Erfassungsbereich der zweiten Kamera 28
- 29: starre Verbindung

## Patentansprüche

1. Verfahren zur Inbetriebnahme eines Mehrachssystems (10), wobei das Mehrachssystem (10) als Komponenten eine Anzahl an Segmenten (11), die über jeweilige Gelenke (12) verbunden sind und durch eine Steuerung (20, 21) in einer oder mehreren Achsen bewegbar sind, und ein Werkzeug (13) umfasst, das mit einem der Segmente (11) verbunden ist und durch die Steuerung (20, 21) an eine vorgegebene Position bewegbar und ansteuerbar ist,
bei dem
- eine Mehrzahl an optischen Markern (15) in der Umgebung des Mehrachssystems (10) angeordnet wird;
- Positionskoordinaten der optischen Marker (15) in einem ersten, globalen Koordinatensystem ermittelt und in der Steuerung (20, 21) gespeichert werden;
- die Umgebung des Mehrachssystems (10) mit der Mehrzahl an optischen Markern (15) durch ein Kamerasystem (26), das zumindest eine Kamera (27, 28) umfasst, als Bild-daten erfasst wird;
- die Bilddaten des Kamerasystems (26) an ein Augmented Reality (AR)-System (23) übertragen und in einer Ausgabevorrichtung (25) visualisiert werden,
**dadurch gekennzeichnet, dass**
- in der Visualisierung der Bilddaten zusätzlich zu den in den Bilddaten enthaltenen optischen Markern (15) virtuelle Marker (16) dargestellt werden, wobei ein jeweiliger virtueller Marker (16) genau einem der optischen Marker (15) zugeordnet ist und die Position eines jeweiligen virtuellen Markers (16) in den visualisierten Bilddaten sich aus einer Transformation der Positionskoordinaten des zugeordneten optischen Markers (15) aus dem ersten, globalen Koordinatensystem in ein zweites Koordinatensystem entsprechend einer Position und Orientierung des Kamerasystems (26) ergibt;
- eine Überprüfung erfolgt, ob ein optischer Marker (15) und der zugeordnete virtuelle Marker (16) in den visualisierten Bilddaten sich überlagern und bei dem
- eine Bildverarbeitung vorgesehen ist, welche eine auf jeder der Komponenten angeordneten Markierung in den visualisierten Bilddaten detektiert und;
- für jede der Komponenten ein Hüllkörper (11H, 13H) definiert und dieser zugeordnet ist, wobei ein einer Komponente zugeordneter Hüllkörper (11H, 13H) die zugeordnete Komponente, insbesondere vollständig, einschließt;
- bei einer Bewegung des Mehrachssystems (10) im Raum die Position der Hüllkörper (11H, 13H) in dem ersten, globalen Koordinatensystem berechnet und in das zweite Koordinatensystem entsprechend der Position und Orientierung des Kamerasystems (26) transformiert wird, wobei die in das zweite Koordinatensystem transformierten Hüllkörper (11H, 13H) zusammen mit dem von dem Kamerasystem (26) aufgenommenen Bild, das die Markierung einer jeweiligen Komponente umfasst, in dem AR-System (23) visualisiert werden;
- durch Auswertung der Bewegung einer jeweiligen Markierung der Komponente und der Bewegung der zugeordneten Hüllkörper überprüft wird, ob die Hüllkörper ihrer zugeordneten Komponente während der Bewegung folgen.

2. Verfahren nach Anspruch 1, bei dem in dem Schritt des Überprüfens auf eine korrekte Kalibrierung des AR-Systems (23) entschieden wird, wenn der optische Marker (15) und der zugeordnete virtuelle Marker (16) in den visualisierten Bilddaten sich überlagern.

3. Verfahren nach Anspruch 1 oder 2, bei dem in dem Schritt des Überprüfens auf eine fehlerhafte Kalibrierung des AR-Systems (23) entschieden wird, wenn der optische Marker (15) und der zugeordnete virtuelle Marker (16) in den visualisierten Bilddaten sich nicht oder nur teilweise überlagern.

4. Verfahren nach Anspruch 3, bei dem aus einem in den visualisierten Bilddaten ermittelten Versatz zwischen dem optischen Marker (15) und dem zugeordneten virtuellen Marker (16) ermittelt wird, wie groß die tatsächliche Distanz zwischen dem optischen Marker (15) und dem zugeordneten virtuellen Marker (16) ist.

5. Verfahren nach einem der vorhergehenden Ansprüche, bei dem bei einer Nicht-Überlagerung der optischen Markers (15) mit dem zugeordneten virtuellen Marker (16) eine Transformationsvorschrift für die Transformation der Positionskoordinaten von dem ersten, globalen Koordinatensystem in das zweite Koordinatensystem, insbesondere in iterativen Schritten, angepasst wird.

6. Verfahren nach einem der vorhergehenden Ansprüche, bei dem der Schritt des Überprüfens rechnergestützt durch ein Bildverarbeitungsprogramm durchgeführt wird.

7. Verfahren nach einem der vorhergehenden Ansprüche, bei dem Positionskoordinaten eines TCP (14) des Werkzeugs (13) des Mehrachssystems (10) von dem ersten, globalen Koordinatensystem in das zweite Koordinatensystem umgerechnet werden und in den visualisierten Bilddaten zusätzlich zu dem TCP (14) ein virtueller TCP dargestellt wird für eine Überprüfung, ob der TCP (14) und der virtuelle TCP sich in den visualisierten Bilddaten überlagern.

8. Vorrichtung zur Inbetriebnahme eines Mehrachssystems (10), wobei das Mehrachssystem (10) als Komponenten eine Anzahl an Segmenten (11), die über jeweilige Gelenke (12) verbunden sind und in einer oder mehreren Achsen bewegbar sind, und ein Werkzeug (13) umfasst, das mit einem der Segmente (11) verbunden ist und an eine vorgegebene Position bewegbar und ansteuerbar ist,
umfassend
- eine Steuerung (20, 21) zur Ansteuerung der Komponenten des Mehrachssystems (10);
- ein Kamerasystem (26) mit zumindest einer Kamera (27, 28), welches das Mehrachssystem (10) aus einer Umgebung erfasst und Bilddaten der Umgebung bereitstellt;
- eine Mehrzahl an optischen Markern (15) in der Umgebung des Mehrachssystems (10), deren Positionskoordinaten in einem ersten, globalen Koordinatensystem in der Steuerung (20, 21) gespeichert sind;
- ein Augmented Reality (AR)-System (23), dass die von dem Kamerasystem (26) erfassten Bilddaten verarbeitet und in einer Ausgabevorrichtung (25) visualisiert und das dazu eingerichtet ist,
- in der Visualisierung der Bilddaten zusätzlich zu den in den Bilddaten enthaltenen optischen Markern (15) virtuelle Marker (16) darzustellen, wobei ein jeweiliger virtueller Marker (16) genau einem der optischen Marker (15) zugeordnet ist und die Position eines jeweiligen virtuellen Markers (16) in den visualisierten Bilddaten sich aus einer Transformation der Positionskoordinaten des zugeordneten optischen Markers (15) aus dem ersten, globalen Koordinatensystem in ein zweites Koordinatensystem entsprechend einer Position und Orientierung des Kamerasystems (26) ergibt; und
- zu überprüfen, ob sich ein optischer Marker (15) und der zugeordnete virtuelle Marker (16) in den visualisierten Bilddaten überlagern,
wobei
- auf jeder der Komponenten eine Markierung angeordnet ist, welche durch Bildverarbeitung in den visualisierten Bilddaten detektierbar ist;
- für jede der Komponenten ein Hüllkörper (11H, 13H) definiert und dieser zugeordnet ist, wobei ein einer Komponente zugeordneter Hüllkörper (11H, 13H) die zugeordnete Komponente, insbesondere vollständig, einschließt;
- bei einer Bewegung des Mehrachssystems (10) im Raum die Position der Hüllkörper (11H, 13H) in dem ersten, globalen Koordinatensystem berechnet und in das zweite Koordinatensystem entsprechend der Position und Orientierung des Kamerasystems (26) transformiert wird, wobei die in das zweite Koordinatensystem transformierten Hüllkörper (11H, 13H) zusammen mit dem von dem Kamerasystem (26) aufgenommenen Bild, das die Markierung einer jeweiligen Komponente umfasst, in dem AR-System (23) visualisiert werden;
- durch Auswertung der Bewegung einer jeweiligen Markierung der Komponente und der Bewegung der zugeordneten Hüllkörper überprüft wird, ob die Hüllkörper ihrer zugeordneten Komponente während der Bewegung folgen.

## Claims

1. Method for the start-up operation of a multi-axis system (10), wherein the multi-axis system (10) comprises, as components, a number of segments (11), which are connected via respective joints (12) and are movable by a controller (20, 21) in one or more axes, and a tool (13), which is connected to one of the segments (11) and is movable and drivable to a specified position by the controller (20, 21),
in which
- a plurality of optical markers (15) are arranged in the environment of the multi-axis system (10);
- position coordinates of the optical markers (15) in a first, global coordinate system are ascertained and stored in the controller (20, 21);
- the environment of the multi-axis system (10) having the plurality of optical markers (15) is captured in the form of image data by a camera system (26), which comprises at least one camera (27, 28);
- the image data of the camera system (26) are transmitted to an augmented reality (AR) system (23) and visualized in an output apparatus (25),
**characterized in that**
- in addition to the optical markers (15) that are contained in the image data, virtual markers (16) are represented during the visualization of the image data, wherein a respective virtual marker (16) is assigned to exactly one of the optical markers (15) and the position of a respective virtual marker (16) in the visualized image data is obtained from a transformation of the position coordinates of said assigned optical marker (15) from the first, global coordinate system into a second coordinate system corresponding to a position and orientation of the camera system (26);
- a check is carried out as to whether an optical marker (15) and the assigned virtual marker (16) overlay one another in the visualized image data and
in which
- image processing is provided which detects a mark arranged on each of the components in the visualized image data and;
- for each of the components, one bounding body (11H, 13H) is defined and assigned thereto, wherein a bounding body (11H, 13H) that is assigned to a component encloses the assigned component, in particular completely;
- during a movement of the multi-axis system (10) in space, the position of the bounding bodies (11H, 13H) in the first, global coordinate system is calculated and transformed into the second coordinate system corresponding to the position and orientation of the camera system (26), wherein the bounding bodies (11H, 13H), which have been transformed into the second coordinate system are visualized in the AR system (23) together with the image that is recorded by the camera system (26) and comprises the mark of a respective component;
- by evaluating the movement of a respective mark of the component and the movement of the assigned bounding bodies it is checked whether the bounding bodies follow their assigned component during the movement.

2. Method according to Claim 1, in which, in the step of checking for correct calibration of the AR system (23), a decision is made as to when the optical marker (15) and the assigned virtual marker (16) overlay one another in the visualized image data.

3. Method according to Claim 1 or 2, in which, in the step of checking for a calibration of the AR system (23) containing errors, a decision is made as to when the optical marker (15) and the assigned virtual marker (16) do not or only partially overlay one another in the visualized image data.

4. Method according to Claim 3, in which an offset, which is ascertained in the visualized image data, between the optical marker (15) and the assigned virtual marker (16) is used to ascertain the extent of the actual distance between the optical marker (15) and the assigned virtual marker (16).

5. Method according to one of the preceding claims, in which, if the optical markers (15) and the assigned virtual marker (16) do not overlay one another, a transformation rule for the transformation of the position coordinates from the first, global coordinate system into the second coordinate system is adapted, in particular in iterative steps.

6. Method according to one of the preceding claims, in which the step of checking is performed in computer-supported fashion by way of an image processing program.

7. Method according to one of the preceding claims, in which position coordinates of a TCP (14) of the tool (13) of the multi-axis system (10) are converted from the first, global coordinate system into the second coordinate system, and, in addition to the TCP (14), a virtual TCP is represented in the visualized image data for checking whether the TCP (14) and the virtual TCP overlay one another in the visualized image data.

8. Apparatus for the start-up operation of a multi-axis system (10), wherein the multi-axis system (10) comprises, as components, a number of segments (11), which are connected via respective joints (12) and are movable in one or more axes, and a tool (13), which is connected to one of the segments (11) and is movable and drivable to a specified position,
Comprising
- a controller (20, 21) for driving the components of the multi-axis system (10);
- a camera system (26) having at least one camera (27, 28), which captures the multi-axis system (10) from an environment and provides image data of the environment;
- a plurality of optical markers (15) in the environment of the multi-axis system (10), the position coordinates of which are stored in a first, global coordinate system in the controller (20, 21);
- an augmented reality (AR) system (23) that processes the image data captured by the camera system (26) and visualizes them in an output apparatus (25) which is set up to
- represent in the visualization of the image data not only the optical markers (15) contained in the image data, but also virtual markers (16), wherein a respective virtual marker (16) is assigned to exactly one of the optical markers (15), and the position of a respective virtual marker (16) in the visualized image data is obtained from a transformation of the position coordinates of the assigned optical marker (15) from the first, global coordinate system into a second coordinate system corresponding to a position and orientation of the camera system (26); and
- check whether an optical marker (15) and the associated virtual marker (16) overlay each other in the visualized image data, wherein
- a mark is arranged on each of the components, which mark is detectable in the visualized image data by way of image processing;
- for each of the components, one bounding body (11H, 13H) is defined and assigned thereto, wherein a bounding body (11H, 13H) that is assigned to a component encloses the assigned component, in particular completely;
- during a movement of the multi-axis system (10) in space, the position of the bounding bodies (11H, 13H) in the first, global coordinate system is calculated and transformed into the second coordinate system corresponding to the position and orientation of the camera system (26), wherein the bounding bodies (11H, 13H), which have been transformed into the second coordinate system are visualized in the AR system (23) together with the image that is recorded by the camera system (26) and comprises the mark of a respective component;
- by evaluating the movement of a respective mark of the component and the movement of the assigned bounding bodies it is checked whether the bounding bodies follow their assigned component during the movement.

## Revendications

1. Procédé de mise en service d'un système multiaxe (10), dans lequel le système multiaxe (10) comprend dans ses composants un certain nombre de segments (11), qui sont reliés par l'intermédiaire d'articulations (12) respectives et peuvent être déplacés selon un ou plusieurs axe(s) grâce à une commande (20, 21), ainsi qu'un outil (13) qui est relié à l'un des segments (11) et peut être déplacé et être commandé au niveau d'une position prédéfinie grâce à la commande (20, 21),
dans lequel
- une pluralité de marqueurs optiques (15) sont agencés au voisinage du système multiaxe (10) ;
- des coordonnées de position des marqueurs optiques (15) sont déterminées selon un premier système global de coordonnées et sont mémorisées dans la commande (20, 21) ;
- le voisinage du système multiaxe (10) avec la pluralité de marqueurs optiques (15) est enregistré sous forme de données d'image grâce à un système de caméra (26) qui comprend au moins une caméra (27, 28) ;
- les données d'image du système de caméra (26) sont transmises à un système de réalité augmentée (RA) (23) et sont visualisées dans un appareil d'affichage (25),
**caractérisé en ce que**
- des marqueurs virtuels (16) sont représentés dans la visualisation des données d'image en plus des marqueurs optiques (15) contenus dans les données d'image, dans lequel un marqueur virtuel (16) respectif est associé à exactement un des marqueurs optiques (15) et la position d'un marqueur virtuel (16) respectif dans les données d'image visualisées résulte d'une transformation des coordonnées de position du marqueur optique (15) associé à partir du premier système global de coordonnées vers un deuxième système de coordonnées en fonction d'une position et d'une orientation du système de caméra (26) ;
- une vérification a lieu afin de constater si un marqueur optique (15) et le marqueur virtuel (16) associé se superposent dans les données d'image visualisées, et
dans lequel
- un traitement d'image est prévu, qui détecte un marquage agencé sur chacun des composants au sein des données d'image visualisées, et ;
- un corps d'enveloppe (11H, 13H) est défini pour chacun des composants et est associé audit composant, dans lequel un corps d'enveloppe (11H, 13H) associé à un composant inclut, en particulier complètement, le composant associé ;
- lors d'un déplacement du système multiaxe (10) dans l'espace, la position du corps d'enveloppe (11H, 13H) est calculée selon le premier système global de coordonnées et est transformée selon le deuxième système de coordonnées en fonction de la position et de l'orientation du système de caméra (26), dans lequel les corps d'enveloppe (11H, 13H) transformés selon le deuxième système de coordonnées sont visualisés dans le système RA (23) en même temps que l'image recueillie par le système de caméra (26) et comprenant le marquage d'un composant respectif ;
- une vérification a lieu grâce à l'évaluation du déplacement d'un marquage respectif des composants et du déplacement des corps d'enveloppe associés afin de constater si les corps d'enveloppe suivent leurs composants associés pendant le déplacement.

2. Procédé selon la revendication 1, dans lequel, à l'étape de vérification, un étalonnage correct du système RA (23) indique que le marqueur optique (15) et le marqueur virtuel (16) associé se superposent dans les données d'image visualisées.

3. Procédé selon la revendication 1 ou 2, dans lequel, à l'étape de vérification, un étalonnage erroné du système RA (23) indique que le marqueur optique (15) et le marqueur virtuel (16) associé ne se superposent pas ou seulement partiellement dans les données d'image visualisées.

4. Procédé selon la revendication 3, dans lequel l'étendue de la distance effective entre le marqueur optique (15) et le marqueur virtuel (16) associé est déterminée à partir d'un décalage, déterminé dans les données d'image visualisées, entre le marqueur optique (15) et le marqueur virtuel (16) associé.

5. Procédé selon l'une quelconque des revendications précédentes, dans lequel, dans le cas d'une non-superposition du marqueur optique (15) avec le marqueur virtuel (16) associé, une indication de transformation est établie pour la transformation des coordonnées de position issues du premier système global de coordonnées selon le deuxième système de coordonnées, en particulier par étapes itératives.

6. Procédé selon l'une quelconque des revendications précédentes, dans lequel l'étape de vérification est mise en oeuvre de manière assistée par ordinateur grâce à un programme de traitement d'images.

7. Procédé selon l'une quelconque des revendications précédentes, dans lequel des coordonnées de position d'un TCP (14) de l'outil (13) du système multiaxe (10) sont converties selon le deuxième système de coordonnées à partir du premier système global de coordonnées et un TCP virtuel est représenté dans les données d'image visualisées en plus du TCP (14) afin de vérifier si le TCP (14) et le TCP virtuel se superposent dans les données d'image visualisées.

8. Dispositif de mise en service d'un système multiaxe (10), dans lequel le système multiaxe (10) comprend dans ses composants un certain nombre de segments (11), qui sont reliés par l'intermédiaire d'articulations (12) respectives et peuvent être déplacés selon un ou plusieurs axe(s), ainsi qu'un outil (13) qui est relié à l'un des segments (11) et peut être déplacé et être commandé au niveau d'une position prédéfinie,
comprenant
- une commande (20, 21) destinée à commander les composants du système multiaxe (10),
- un système de caméra (26) comptant au moins une caméra (27, 28), qui enregistre le système multiaxe (10) à partir d'un environnement et met à disposition des données d'image de l'environnement ;
- une pluralité de marqueurs optiques (15) dans l'environnement du système multiaxe (10), dont les coordonnées de position sont mémorisées dans la commande (20, 21) selon un premier système global de coordonnées ;
- un système de réalité augmentée RA (23) qui traite les données d'image enregistrées par le système de caméra (26) et les visualise dans un appareil d'affichage (25) et qui est prévu pour,
- représenter des marqueurs virtuels (16) dans la visualisation des données d'image en plus des marqueurs optiques (15) contenus dans les données d'image, dans lequel un marqueur virtuel (16) respectif est associé à exactement un des marqueurs optiques (15) et la position d'un marqueur virtuel (16) respectif dans les données d'image visualisées résulte d'une transformation des coordonnées de position du marqueur optique (15) associé à partir du premier système global de coordonnées vers un deuxième système de coordonnées en fonction d'une position et d'une orientation du système de caméra (26) ; et
- vérifier si un marqueur optique (15) et le marqueur virtuel (16) associé se superposent dans les données d'image visualisées,
dans lequel
- un marquage pouvant être détecté par traitement d'image dans les données d'image visualisées est agencé sur chacun des composants ;
- un corps d'enveloppe (11H, 13H) est défini pour chacun des composants et est associé audit composant, dans lequel un corps d'enveloppe (11H, 13H) associé à un composant inclut, en particulier complètement, le composant associé ;
- lors d'un déplacement du système multiaxe (10) dans l'espace, la position du corps d'enveloppe (11H, 13H) est calculée selon le premier système global de coordonnées et est transformée selon le deuxième système de coordonnées en fonction de la position et de l'orientation du système de caméra (26), dans lequel les corps d'enveloppe (11H, 13H) transformés selon le deuxième système de coordonnées sont visualisés dans le système RA (23) en même temps que l'image recueillie par le système de caméra (26) et comprenant le marquage d'un composant respectif ;
- une vérification a lieu grâce à l'évaluation du déplacement d'un marquage respectif des composants et du déplacement des corps d'enveloppe associés afin de constater si les corps d'enveloppe suivent leurs composants associés pendant le déplacement.
